# EUROPÄISCHE PATENTANMELDUNG

(11) **EP 4 201 180 A1**
(43) Veröffentlichungstag der Anmeldung: **28.06.2023**
(21) Anmeldenummer: 22202701.3
(22) Anmeldetag: 20.10.2022
(51) Int. Cl.: A01B 71/02

(54) **LANDWIRTSCHAFTLICHES GESPANN**

(30) Priorität: 22.12.2021 DE 102021134406
(71) Anmelder: CLAAS Tractor S.A.S., 78141 Vélizy-Villacoublay Cedex (FR)
(72) Erfinder: Heydekorn, Jens, 33428 Harsewinkel (DE)
(74) Vertreter: CLAAS Gruppe

(57) **Zusammenfassung**

Die Erfindung betrifft ein landwirtschaftliches Gespann (1), wobei ein Fahrerassistenzsystem (4) Arbeitsaggregate (5) der landwirtschaftlichen Arbeitsmaschine (2) durch Einstellung von Maschinenparametern steuert und/oder regelt, wobei das Fahrerassistenzsystem (4) eine Arbeitsmaschinen-Optimierungseinheit aufweist, wobei das Anbaugerät (3) eine Anbaugeräte-Steuereinheit (6) aufweist, die über eine Datenschnittstelle mit dem Fahrerassistenzsystem (4) kommuniziert, wobei die Anbaugeräte-Optimierungseinheit Einstellvorgaben für Maschinenparameter der landwirtschaftlichen Arbeitsmaschine (2) ermittelt und über die Datenschnittstelle an das Fahrerassistenzsystem (4) übermittelt und wobei die Arbeitsmaschinen-Optimierungseinheit die Einstellvorgaben bei der Ermittlung der einzustellenden Maschinenparameter berücksichtigt. Es wird vorgeschlagen, dass die Anbaugeräte-Steuereinheit (6) Zustandsdaten des Anbaugerätes (3) über die Datenschnittstelle an das Fahrerassistenzsystem (4) überträgt, dass das Fahrerassistenzsystem (4) die Zustandsdaten einem Benutzer (8) über die Ein-/Ausgabeeinheit (7) anzeigt, dass der Benutzer (8) über die Ein-/Ausgabeeinheit (7) mindestens eine Anbaugeräte-Zielvorgabe für die Anbaugeräte-Optimierungseinheit eingibt, die das Fahrerassistenzsystem (4) über die Datenschnittstelle an die Anbaugeräte-Steuereinheit (6) übermittelt und dass die Anbaugeräte-Optimierungseinheit die Anbaugeräte-Zielvorgabe bei der Ermittlung der einzustellenden Maschinenparameter und/oder der Einstellvorgaben berücksichtigt.

## Beschreibung

Die vorliegende Erfindung betrifft ein landwirtschaftliches Gespann gemäß dem Oberbegriff von Anspruch 1.

Im Fokus stehen vorliegend landwirtschaftliche Gespanne. Diese umfassen eine landwirtschaftliche Arbeitsmaschine und ein Anbaugerät. Die landwirtschaftlichen Arbeitsmaschinen können Zugmaschinen, insbesondere Traktoren, aber auch Erntemaschinen wie Mähdrescher und Feldhäcksler sein. Diese sind mit einem Anbaugerät, beispielsweise über eine Geräteschnittstelle wie einen Heckkraftheber oder einen Frontkraftheber, ausgestattet. Sie können zusätzlich oder alternativ ein Anbaugerät in Form eines Anhängers ziehen. Die landwirtschaftlichen Arbeitsmaschinen und das Anbaugerät werden üblicherweise zur Feldbearbeitung verwendet.

Herkömmlich wird bei der Optimierung von landwirtschaftlichen Gespannen zwischen landwirtschaftlichen Arbeitsmaschinen und deren Anbaugeräten unterschieden. Aus technischer Sicht ist die landwirtschaftliche Arbeitsmaschine eine Maschine, die durch einen Motor Kraft zur Verfügung stellt. Diese Kraft kann unterschiedlich genutzt werden, beispielsweise zur Fortbewegung, zum Antrieb einer Pumpe oder zum Verfahren mechanischer Teile. Das Anbaugerät ist ein Verbraucher, der die von der landwirtschaftlichen Arbeitsmaschine bereitgestellte Kraft verwendet.

Gemeinsam bilden die landwirtschaftliche Arbeitsmaschine und das Anbaugerät eine Einheit, die als Werkzeug zur Feldbearbeitung genutzt wird. Klassisch wird in diesem Verbund davon ausgegangen, dass ein Benutzer, insbesondere der Fahrer und Bediener der landwirtschaftlichen Arbeitsmaschine, ausschließlich die landwirtschaftliche Arbeitsmaschine steuern und bedienen kann. Er muss ein Verständnis aufgebaut haben, inwiefern die Veränderung der Parameter der landwirtschaftlichen Arbeitsmaschine sich auf die Funktionsweise des Anbaugerätes auswirkt.

Ein bekannter Ansatz, diesen Nachteil zu überwinden, bildet die Technologie TIM (Traktor Implement Management). Diese bildet die Grundlage für die teilweise Steuerung der landwirtschaftlichen Arbeitsmaschine durch das Anbaugerät, um beispielsweise bedarfsgerecht Leistungsparameter der landwirtschaftlichen Arbeitsmaschine zu verändern. TIM trägt dem Umstand Rechnung, dass das Arbeitsergebnis einer Feldbearbeitung wesentlich von den Einstellungen des Anbaugerätes abhängt. Durch TIM wird das Anbaugerät entsprechend bei der Optimierung des landwirtschaftlichen Gespanns stärker berücksichtigt.

Die Implementierung von TIM sieht in der Regel mindestens einen Einstellautomaten seitens des Anbaugerätes vor, der die Überwachung des Anbaugerätes hinsichtlich des Bedarfs an Maschinenkraft der landwirtschaftlichen Arbeitsmaschine beinhaltet und diesen der landwirtschaftlichen Arbeitsmaschine mitteilt.

Nachteilig daran ist, dass keine oder wenige Eingriffsmöglichkeiten für den Benutzer existieren, um in die Steuerung des Anbaugerätes einzugreifen. Übliche Bedienschnittstellen von landwirtschaftlichen Arbeitsmaschinen sind auf die Bedienung der landwirtschaftlichen Arbeitsmaschine ausgelegt. Bei TIM ist allerdings das Anbaugerät, jedenfalls teilweise, federführend. Somit existiert eine Diskrepanz zwischen den Bedienmöglichkeiten und der Wichtigkeit der entsprechenden Komponenten für das Arbeitsergebnis.

Die TIM-Technologie ist somit für einen Bediener hinsichtlich der Wahrnehmung und Steuerung des Anbaugerätes intransparent. Komplexe Anbaugeräte sind damit nicht ohne detailliertes Wissen in Bezug auf deren Auslastung und Möglichkeiten effektiv einsetzbar.

Es ist dabei eine Herausforderung, den bekannten Stand der Technik zu verbessern.

Der Erfindung liegt das Problem zugrunde, das bekannte landwirtschaftliche Gespann derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass dem Benutzer über eine Datenschnittstelle ein Status des Anbaugerätes mitgeteilt werden kann und dem Benutzer die Möglichkeit gegeben wird, über die landwirtschaftliche Arbeitsmaschine einer Anbaugeräte-Steuereinheit Zielvorgaben zu übermitteln, die diese bei der Optimierung des Anbaugerätes berücksichtigen kann und dass darüber der Benutzer indirekt die landwirtschaftliche Arbeitsmaschine über das Anbaugerät steuern kann. Somit werden die Vorteile des Vorsehens dedizierter Optimierungsmodelle auf Anbaugeräten der TIM Technologie gewahrt, während für den Benutzer die Möglichkeit geschaffen wird, seine eigenen Zielvorgaben in den Prozess einzubringen und so sein Arbeitsergebnis zu verbessern.

Im Einzelnen wird vorgeschlagen, dass die Anbaugeräte-Steuereinheit Zustandsdaten des Anbaugerätes über die Datenschnittstelle an das Fahrerassistenzsystem überträgt, dass das Fahrerassistenzsystem die Zustandsdaten einem Benutzer über die Ein-/Ausgabeeinheit anzeigt, dass der Benutzer über die Ein-/Ausgabeeinheit mindestens eine Anbaugeräte-Zielvorgabe für die Anbaugeräte-Optimierungseinheit eingibt, die das Fahrerassistenzsystem über die Datenschnittstelle an die Anbaugeräte-Steuereinheit übermittelt und dass die Anbaugeräte-Optimierungseinheit die Anbaugeräte-Zielvorgabe bei der Ermittlung der einzustellenden Maschinenparameter und/oder der Einstellvorgaben berücksichtigt.

Bei einer Ausgestaltung gemäß Anspruch 2 wird vorgeschlagen, dass die Arbeitsmaschinen-Optimierungseinheit und/oder die Anbaugeräte-Optimierungseinheit kennfeldbasierte Einstellautomaten sind. Diese kennfeldbasierten Einstellautomaten können vorzugsweise über strategische Vorgaben derart beeinflusst werden, dass der Benutzer ein für seine Zwecke optimiertes Ergebnis mit wenig Aufwand und ohne größere technische Kenntnisse erreichen kann. Dafür kann der Benutzer beispielsweise als Zielvorgabe eine höhere Qualität vorgeben und über die Kennfelder werden diverse Maschinenparameter in Abhängigkeit voneinander entsprechend angepasst.

Bei einer bevorzugten Ausgestaltung gemäß Anspruch 3 ist vorgesehen, dass die Ein-/Ausgabeeinheit ein dediziertes Eingabegerät und/oder ein dediziertes Ausgabegerät aufweist. So kann die Steuerung der landwirtschaftlichen Arbeitsmaschine von der Steuerung des Anbaugerätes getrennt werden. In Kombination mit einer Standardisierung der Datenschnittstelle zwischen landwirtschaftlicher Arbeitsmaschine und Anbaugerät wird so eine Möglichkeit geschaffen, eine Vielzahl von Anbaugeräten auf gleiche Art und Weise anzusteuern, ohne diese Steuerung kompliziert in der Steuerung der landwirtschaftlichen Arbeitsmaschine unterzubringen. Dem Benutzer wird es entsprechend der Wichtigkeit der Ansteuerung des Anbaugerätes zur Erreichung des gewünschten Arbeitsergebnisses einfach ermöglicht, dessen Ansteuerung vorzunehmen.

Die Ansprüche 4 und 5 beschäftigen sich mit Ausgestaltungen möglicher Standardisierungen der Datenschnittstelle, um landwirtschaftliche Gespanne in unterschiedlichen Kombinationen vorschlagsgemäß auf einfache Art und Weise zu nutzen. Besonders interessant ist dabei, dass der Benutzer sich nicht auf wechselnde Eingabemöglichkeiten und Anzeigen bei wechselnden Anbaugeräten einstellen muss und dieselbe Hardware der landwirtschaftlichen Arbeitsmaschine verwenden kann, um ganz unterschiedliche Anbaugeräte zu optimieren. Sind außerdem die Zielvorgaben allgemein und gegebenenfalls unabhängig von den spezifischen Anbaugeräten gehalten, erhöht dies den Komfort für den Benutzer weiter.

Im Folgenden wird die Erfindung anhand einer lediglich ein Ausführungsbeispiel darstellenden Zeichnung näher erläutert. In der Zeichnung zeigt
- Fig. 1: ein vorschlagsgemäßes landwirtschaftliches Gespann mit einem dedizierten Eingabegerät und einem dedizierten Ausgabegerät und
- Fig. 2: eine Detailansicht einer vorschlagsgemäßen Anzeige des dedizierten Ausgabegerätes und schematisch die Möglichkeiten zur Einstellung.

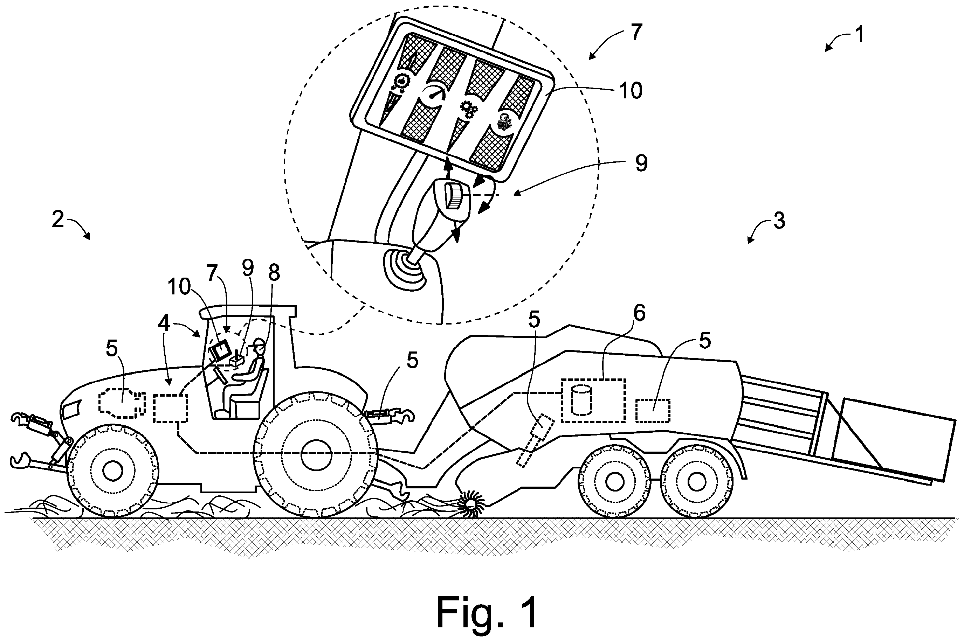

Fig. 1 zeigt ein landwirtschaftliches Gespann 1 wie es vorliegend im Fokus steht. Die landwirtschaftliche Arbeitsmaschine 2 ist hier und vorzugsweise ein Traktor, das Anbaugerät 3 kann prinzipiell ein beliebiges Anbaugerät 3 sein. Das Anbaugerät 3 kann über eine Geräteschnittstelle, beispielsweise einen Heckkraftheber, mit der landwirtschaftlichen Arbeitsmaschine 2 verbunden sein. Das Anbaugerät 3 ist hier und vorzugsweise mit einer Zapfwelle der landwirtschaftlichen Arbeitsmaschine 2 verbunden.

Das in den Figuren dargestellte und insoweit bevorzugte Ausführungsbeispiel betrifft ein landwirtschaftliches Gespann 1 aufweisend eine landwirtschaftliche Arbeitsmaschine 2 und ein Anbaugerät 3.

Die landwirtschaftliche Arbeitsmaschine 2 weist ein Fahrerassistenzsystem 4 auf. Das Fahrerassistenzsystem 4 steuert und/oder regelt Arbeitsaggregate 5 der landwirtschaftlichen Arbeitsmaschine 2 durch Einstellung von Maschinenparametern.

Das Fahrerassistenzsystem 4 weist eine Arbeitsmaschinen-Optimierungseinheit auf, die die an der landwirtschaftlichen Arbeitsmaschine 2 einzustellenden Maschinenparameter zumindest teilweise, insbesondere vollständig, ermittelt. Hier und vorzugsweise erfolgt diese Ermittlung hinsichtlich einer Arbeitsmaschinen-Zielvorgabe optimiert. Diese Arbeitsmaschinen-Zielvorgabe kann beispielsweise eine strategische Zielvorgabe wie eine hohe Arbeitsqualität, aber auch eine technische Zielvorgabe wie eine gewisse Geschwindigkeit sein.

Das Anbaugerät 3 weist eine Anbaugeräte-Steuereinheit 6 auf, die über eine Datenschnittstelle mit dem Fahrerassistenzsystem 4 kommuniziert. Diese Datenschnittstelle weist dabei eine physische Komponente seitens der landwirtschaftlichen Arbeitsmaschine 2 und des Anbaugerätes 3 auf. Sie basiert auf einem Kommunikationsprotokoll, über das die landwirtschaftliche Arbeitsmaschine 2 und das Anbaugerät 3 sich verständigen können. Der Begriff "Datenschnittstelle" ist vorliegend weit zu verstehen. Darunter fällt jede Kommunikationsanbindung. Insbesondere kann diese auch verschiedene Wege, beispielsweise eine Kabelverbindung und eine Funkverbindung umfassen. Vorzugsweise ist die Datenschnittstelle allerdings eine ISOBUS-Schnittstelle.

Die Anbaugeräte-Steuereinheit 6 steuert und/oder regelt Arbeitsaggregate 5 des Anbaugerätes 3 durch Einstellung von Maschinenparametern. Die Anbaugeräte-Steuereinheit 6 weist hierfür eine Anbaugeräte-Optimierungseinheit auf, die die am Anbaugerät 3 einzustellenden Maschinenparameter zumindest teilweise, insbesondere vollständig, ermittelt.

Die Anbaugeräte-Optimierungseinheit ermittelt außerdem Einstellvorgaben für Maschinenparameter der landwirtschaftlichen Arbeitsmaschine 2. Sie übermittelt diese über die Datenschnittstelle an das Fahrerassistenzsystem 4. Hier und vorzugsweise ist das landwirtschaftliche Gespann 1 derart ausgestaltet, dass das Anbaugerät 3 die landwirtschaftliche Arbeitsmaschine 2 mittels der TIM-Technologie teilweise steuern kann.

So oder so berücksichtigt die Arbeitsmaschinen-Optimierungseinheit die Einstellvorgaben bei der Ermittlung der einzustellenden Maschinenparameter. Die Arbeitsmaschinen-Optimierungseinheit versucht dabei, abhängig von den aktuellen Gegebenheiten und den Möglichkeiten und vorgegebenen Einstellungen der landwirtschaftlichen Arbeitsmaschine 2, die Einstellvorgaben einzuhalten oder ihnen nahezukommen. Die Einstellvorgaben können Zielgrößen oder Zielbereiche für Maschinenparameter oder dergleichen sein. Insbesondere kann eine Einstellvorgabe ein Maschinenparameter, insbesondere eine Drehzahl und/oder ein Drehmoment der Zapfwelle der landwirtschaftlichen Arbeitsmaschine 2 sein.

Der Begriff "Anbaugerät" ist vorliegend weit zu verstehen und umfasst sowohl klassische Anbaugeräte 3, die von der landwirtschaftlichen Arbeitsmaschine 2 getragen werden als auch Anhänger, die lediglich gezogen werden und solche Mischformen, die ein eigenes Fahrwerk aufweisen und zusätzlich auf die landwirtschaftliche Arbeitsmaschine 2 aufgesattelt sind. Hier und vorzugsweise wird dem Anbaugerät 3 von der landwirtschaftlichen Arbeitsmaschine 2 Energie zur Verfügung gestellt. Hier und vorzugsweise wird die Energie von der landwirtschaftlichen Arbeitsmaschine 2 über die Zapfwelle der landwirtschaftlichen Arbeitsmaschine 2 an das Anbaugerät 3 übertragen. Zusätzlich oder alternativ kann elektrische Energie über eine Schnittstelle von der landwirtschaftlichen Arbeitsmaschine 2 an das Anbaugerät 3 übertragen werden.

Das Fahrerassistenzsystem 4 steuert die landwirtschaftliche Arbeitsmaschine 2, indem es Maschinenparameter an den Arbeitsaggregaten 5 der landwirtschaftlichen Arbeitsmaschine 2 nach Art einer Steuerung und/oder Regelung einstellt. Es ist somit direkt in die Funktionen der landwirtschaftlichen Arbeitsmaschine 2 eingebunden. Es stellt weiterhin über die Ein-/Ausgabeeinheit 7 eine Schnittstelle zum Benutzer 8 bereit, der über das Fahrerassistenzsystem 4 die Steuerung der landwirtschaftlichen Arbeitsmaschine 2 optimieren kann. Außerdem unterbreitet das Fahrerassistenzsystem 4 dem Benutzer 8 vorzugsweise Vorschläge zur Optimierung der landwirtschaftlichen Arbeitsmaschine 2, insbesondere unabhängig vom Anbaugerät 3. Es kann vorgesehen sein, dass das Fahrerassistenzsystem 4 die landwirtschaftliche Arbeitsmaschine 2 lenkt und vorzugsweise fährt. Hier und vorzugsweise läuft das Fahrerassistenzsystem 4, insbesondere vollständig, auf Hardware der landwirtschaftlichen Arbeitsmaschine 2.

Arbeitsaggregate 5 sind beispielsweise ein Motor, ein Heckkraftheber, ein Getriebe, Hydraulikzylinder und dergleichen.

Bei den Maschinenparametern handelt es sich um Maschinenparameter im engen Sinne wie die Motordrehzahl oder eine Position einer Drosselklappe. Ebenso sind Einstellungen des Heckkrafthebers und dergleichen umfasst. Grundsätzlich kann deren Ermittlung und/oder Einstellung durch das Fahrerassistenzsystem 4 bzw. die Anbaugeräte-Steuereinheit 6 bzw. deren jeweilige Optimierungseinheit indirekt erfolgen, indem beispielsweise Steuersignale für eine dedizierte Steuereinheit eines Arbeitsaggregats 5 generiert und diese an die dedizierte Steuerung übertragen werden.

Die Optimierungseinheiten sind eigenständige logische Einheiten, die die landwirtschaftliche Arbeitsmaschine 2 respektive das Anbaugerät 3 aufweisen. Diese sind auch bei Verwendung der landwirtschaftlichen Arbeitsmaschine 2 respektive des Anbaugerätes 3 in einem anderen landwirtschaftlichen Gespann 1 verfügbar und insoweit voneinander unabhängig. Grundsätzlich ist eine Cloud Nutzung möglich, hier und vorzugsweise sind die Optimierungseinheiten jedoch jeweils Teil der landwirtschaftlichen Arbeitsmaschine 2 bzw. des Anbaugerätes 3.

Wesentlich ist nun, dass die Anbaugeräte-Steuereinheit 6 Zustandsdaten des Anbaugerätes 3 über die Datenschnittstelle an das Fahrerassistenzsystem 4 überträgt, dass das Fahrerassistenzsystem 4 die Zustandsdaten einem Benutzer 8 über die Ein-/Ausgabeeinheit 7 anzeigt, dass der Benutzer 8 über die Ein-/Ausgabeeinheit 7 mindestens eine Anbaugeräte-Zielvorgabe für die Anbaugeräte-Optimierungseinheit eingibt, die das Fahrerassistenzsystem 4 über die Datenschnittstelle an die Anbaugeräte-Steuereinheit 6 übermittelt und dass die Anbaugeräte-Optimierungseinheit die Anbaugeräte-Zielvorgabe oder Anbaugeräte-Zielvorgaben bei der Ermittlung der einzustellenden Maschinenparameter und/oder der Einstellvorgaben berücksichtigt.

Die Zustandsdaten können prinzipiell alle Informationen zum Anbaugerät 3 umfassen. Hier und vorzugsweise umfassen die Zustandsdaten, insbesondere primär, strategische Zustandsdaten. Solche strategischen Zustandsdaten können eine Auslastung, beispielsweise prozentual, und/oder eine Arbeitsqualität, beispielsweise prozentual, und/oder eine Arbeitseffizienz, beispielsweise prozentual, umfassen. Damit wird dem Benutzer 8 ermöglicht, einzuschätzen, ob das Anbaugerät 3 effizient arbeitet. Die Zustandsdaten können über die Ein/-Ausgabeeinheit so dargestellt werden, dass der Benutzer 8 ein tieferes Verständnis der Zustände des Anbaugerätes 3 erhält. Zusätzlich ermöglichen diese Zustandsdaten ein Steuern der Arbeitsweise des Anbaugerätes 3 durch den Benutzer 8. Darüber hinaus werden damit auch Einstellmöglichkeiten zur Effizienz und Umweltverträglichkeit am Anbaugerät 3 erst ermöglicht.

Die Anbaugeräte-Zielvorgabe oder Anbaugeräte-Zielvorgaben sind hier und vorzugsweise strategische Zielvorgaben, die insbesondere Optimierungskriterien umfassen. Die Optimierungskriterien können beispielsweise eine höhere Qualität und/oder eine höhere Effizienz und/oder eine höhere Kosteneinsparung umfassen.

Weiter ist hier und vorzugsweise vorgesehen, dass die Arbeitsmaschinen-Optimierungseinheit ein kennfeldbasierter Arbeitsmaschinen-Einstellautomat ist, und/oder, dass die Anbaugeräte-Optimierungseinheit ein kennfeldbasierter Anbaugeräte-Einstellautomat ist.

Vorzugsweise ist vorgesehen, dass die Anbaugeräte-Zielvorgabe eine strategische Zielvorgabe ist. Möglich ist, dass die strategische Zielvorgabe eine Zielvorgabe der Auslastung des Anbaugerätes 3 und/oder der Arbeitsqualität des Anbaugerätes 3 und/oder der Arbeitseffizienz des Anbaugerätes 3 und/oder der Arbeitsleistung des Anbaugerätes 3 und/oder des Energieverbrauchs ist. Dabei kann die Zielvorgabe eine Maximierung oder eine Minimierung der entsprechenden Größe sein.

Diese Erläuterungen beziehen sich auf die Ausgestaltung des landwirtschaftlichen Gespanns 1. Das landwirtschaftliche Gespann 1 ist also derart ausgestaltet, dass die Anbaugeräte-Zielvorgabe eine strategische Zielvorgabe sein kann. Dabei ist nicht ausgeschlossen, dass sie auch zusätzlich bei manchen Eingaben eine andere Zielvorgabe sein kann.

Die Kennfelder, auf denen die Einstellautomaten basieren, bilden Abhängigkeiten der Maschinenparameter voneinander und von weiteren Ein- und Ausgangsgrößen des jeweiligen Einstellautomaten ab. Ein Einstellautomat bildet dabei eine logische Einheit, wobei der Arbeitsmaschinen-Einstellautomat und der Anbaugeräte-Einstellautomat voneinander unabhängige logische Einheiten bilden, die jedoch, wie beschrieben, grundsätzlich aufeinander Einfluss nehmen können. Die Kennfelder der Einstellautomaten bilden hier und vorzugsweise neben grundlegenden technischen Zusammenhängen auch strategische Zusammenhänge ab. Der Benutzer 8 kann also eine Strategie, beispielsweise die Steigerung der Arbeitsqualität, vorgeben und die Kennfelder sind derart ausgestaltet, dass diese Strategie auf Basis der aktuellen Situation des landwirtschaftlichen Gespanns 1 in Maschinenparameter übersetzt werden kann. Die aktuelle Situation kann dabei beispielsweise durch Sensoren, Benutzereingaben und dergleichen abgebildet werden und auch komplexe Faktoren wie eine Bodenfeuchtigkeit berücksichtigen. Der jeweilige Einstellautomat gibt basierend auf den Kennfeldern Steuersignale aus, mittels derer die Arbeitsaggregate 5, gegebenenfalls von dedizierten Steuereinheiten, eingestellt werden. Der Einstellautomat kann weiterhin durch Steuersignale, beispielsweise vom Fahrerassistenzsystem 4 und über die Datenschnittstelle, Zielvorgaben erhalten und berücksichtigen. Diese Zielvorgaben und weitere Eingangsdaten können zu einer Verschiebung in einem Arbeitspunkt auf einem Kennfeld führen oder zu einer Neuberechnung der Kennfelder, beispielsweise in Form einer neuen Arbeitspunktlinearisierung.

Bezüglich der Anbaugeräte-Optimierungseinheit sei erwähnt, dass die Anbaugeräte-Zielvorgabe nicht zwingend direkt aus einem Kennfeld, sofern überhaupt vorhanden, abgeleitet werden muss. Vorzugsweise wird die Anbaugeräte-Zielvorgabe jedoch aus einem Kennfeld abgeleitet.

Inwiefern die Anbaugeräte-Zielvorgabe zu Veränderungen in der Arbeitsweise der landwirtschaftlichen Arbeitsmaschine 2 führt, ist situationsabhängig.

Hier und vorzugsweise sind die Zustandsdaten, zumindest teilweise, insbesondere vollständig, Zustandsdaten des Anbaugeräte-Einstellautomaten 3, beispielsweise Abstraktionen der Kennfelder oder Informationen über einen Arbeitspunkt.

Weiter ist hier und vorzugsweise vorgesehen, dass die Ein-/Ausgabeeinheit 7 der landwirtschaftlichen Arbeitsmaschine 2 ein dediziertes Eingabegerät 9 für die Eingabe der Anbaugeräte-Zielvorgabe und/oder ein dediziertes Ausgabegerät 10 für die Anzeige der Zustandsdaten des Anbaugerätes 3 aufweist.

Die dedizierten Geräte werden also nicht zur Steuerung der landwirtschaftlichen Arbeitsmaschine 2 verwendet, sondern dienen nur der Steuerung des Anbaugerätes 3. Insbesondere vorteilhaft ist dies bei der im folgenden beschriebener Standardisierung, wenn ermöglicht wird, dass die dedizierten Geräte für eine Vielzahl verschiedener Anbaugeräte 3 verwendet werden können, obwohl sie eigentlich Teil der Hardware der landwirtschaftlichen Arbeitsmaschine 2 sind.

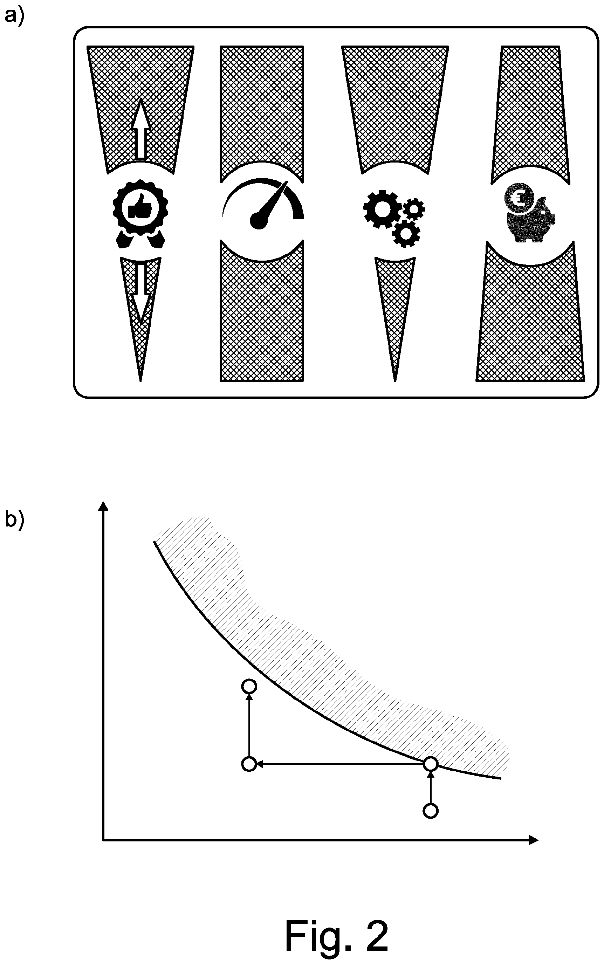

Fig. 2 stellt beispielhaft eine Visualisierung der Einstellmöglichkeiten dar. In der oberen Ansicht werden dabei unterschiedliche strategische Anbaugeräte-Zielvorgaben dargestellt, die eine Tendenz anzeigen, die sich durch eine Änderung ergeben würde. Die untere Visualisierung zeigt ein Kennfeld, das jedoch nicht mit den Kennfeldern der Einstellautomaten übereinstimmen muss, sondern eine eher abstrakte Visualisierung sein kann. Darin soll ebenfalls verdeutlicht werden, wie sich eine strategische Änderung in etwa auf andere strategische Vorgaben auswirken kann. Beispielsweise kann eine Erhöhung der Arbeitsqualität zu einem höheren Energieverbrauch führen.

Es kann auch vorgesehen sein, dass die Datenschnittstelle seitens der landwirtschaftlichen Arbeitsmaschine 2 derart ausgestaltet ist, dass unterschiedliche Anbaugeräte 3 über universelle Datenpakete die Zustandsdaten unabhängig vom spezifischen Anbaugerät 3 in allgemeiner Form an das Fahrerassistenzsystem 4 übertragen können, vorzugsweise, dass das Fahrerassistenzsystem 4 Zustandsdaten zumindest teilweise, insbesondere vollständig, unabhängig von dem spezifischen Anbaugerät 3 anzeigt.

Eine entsprechende Ausgestaltung der Datenschnittstelle ist selbstverständlich auch seitens des Anbaugerätes 3 vorgesehen, dieses kann jedoch prinzipiell häufiger ausgetauscht werden, sodass diesbezüglich die landwirtschaftliche Arbeitsmaschine 2 im Fokus steht.

Durch die universelle Ausgestaltung der Datenpakete und der Datenschnittstelle kann die Anzeige der Ein-/Ausgabeeinheit 7, insbesondere des dedizierten Ausgabegerätes 10, unabhängig vom Anbaugerät 3 sein, beispielsweise indem eine Arbeitsqualität dargestellt wird. Die Logik zur Ermittlung dieser Arbeitsqualität kann dabei auf dem Anbaugerät 3 verbleiben.

Beispiele für Angaben in dem universellen Datenpaket sind eine Auslastung des Anbaugerätes 3 in Prozent, eine Arbeitsqualität in Prozent, eine Arbeitseffizienz in Prozent, eine Flächenleistung in Hektar pro Stunde, ein Energieverbrauch in Leistung pro Stunde oder eine Verarbeitungsgeschwindigkeit in Kilogramm pro Stunde.

Weiter ist hier und vorzugsweise vorgesehen, dass die Datenschnittstelle seitens der landwirtschaftlichen Arbeitsmaschine 2 und seitens des Anbaugerätes 3 derart ausgestaltet ist, dass das Fahrerassistenzsystem 4 die Anbaugeräte-Zielvorgabe unabhängig von dem spezifischen Anbaugerät 3 über universelle Datenpakete an die Anbaugeräte-Steuereinheit 6 übertragen kann.

Insgesamt kann zusätzlich oder alternativ vorgesehen sein, dass die universellen Datenpakete derart ausgestaltet sind, dass zusätzlich spezifische Parameter des Anbaugerätes 3 als Zustandsdaten übermittelt und/oder mittels der Anbaugeräte-Zielvorgabe beeinflusst werden können.

Die Anbaugeräte-Zielvorgaben können beispielsweise ein Steigern oder Senken der Auslastung und/oder der Verarbeitungsgeschwindigkeit und/oder der Effizienz beinhalten.

Neben den allgemeinen Zustandsdaten sind spezialisierte Parameter je nach Typ des Anbaugerätes 3 möglich. Diese speziellen Parameter geben einen detaillierteren Einblick zu den Bestandteilen des Anbaugerätes 3.

### Bezugszeichenliste

- 1: landwirtschaftliches Gespann
- 2: landwirtschaftliche Arbeitsmaschine
- 3: Anbaugerät
- 4: Fahrerassistenzsystem
- 5: Arbeitsaggregat
- 6: Anbaugeräte-Steuereinheit
- 7: Ein-/Ausgabeeinheit
- 8: Benutzer
- 9: dediziertes Eingabegerät
- 10: dediziertes Ausgabegerät

## Patentansprüche

1. Landwirtschaftliches Gespann aufweisend eine landwirtschaftliche Arbeitsmaschine (2) und ein Anbaugerät (3), wobei die landwirtschaftliche Arbeitsmaschine (2) ein Fahrerassistenzsystem (4) aufweist, wobei das Fahrerassistenzsystem (4) Arbeitsaggregate (5) der landwirtschaftlichen Arbeitsmaschine (2) durch Einstellung von Maschinenparametern steuert und/oder regelt, wobei das Fahrerassistenzsystem (4) eine Arbeitsmaschinen-Optimierungseinheit aufweist, die die an der landwirtschaftlichen Arbeitsmaschine (2) einzustellenden Maschinenparameter zumindest teilweise, insbesondere hinsichtlich einer Arbeitsmaschinen-Zielvorgabe optimiert, ermittelt,
wobei das Anbaugerät (3) eine Anbaugeräte-Steuereinheit (6) aufweist, die über eine Datenschnittstelle mit dem Fahrerassistenzsystem (4) kommuniziert, wobei die Anbaugeräte-Steuereinheit (6) Arbeitsaggregate (5) des Anbaugerätes (3) durch Einstellung von Maschinenparametern steuert und/oder regelt,
wobei die Anbaugeräte-Steuereinheit (6) eine Anbaugeräte-Optimierungseinheit aufweist, die die am Anbaugerät (3) einzustellenden Maschinenparameter zumindest teilweise ermittelt,
wobei die Anbaugeräte-Optimierungseinheit Einstellvorgaben für Maschinenparameter der landwirtschaftlichen Arbeitsmaschine (2) ermittelt und über die Datenschnittstelle an das Fahrerassistenzsystem (4) übermittelt und wobei die Arbeitsmaschinen-Optimierungseinheit die Einstellvorgaben bei der Ermittlung der einzustellenden Maschinenparameter berücksichtigt,
**dadurch gekennzeichnet,**
**dass** die Anbaugeräte-Steuereinheit (6) Zustandsdaten des Anbaugerätes (3) über die Datenschnittstelle an das Fahrerassistenzsystem (4) überträgt, dass das Fahrerassistenzsystem (4) die Zustandsdaten einem Benutzer (8) über die Ein-/Ausgabeeinheit (7) anzeigt, dass der Benutzer (8) über die Ein-/Ausgabeeinheit (7) mindestens eine Anbaugeräte-Zielvorgabe für die Anbaugeräte-Optimierungseinheit eingibt, die das Fahrerassistenzsystem (4) über die Datenschnittstelle an die Anbaugeräte-Steuereinheit (6) übermittelt und dass die Anbaugeräte-Optimierungseinheit die Anbaugeräte-Zielvorgabe bei der Ermittlung der einzustellenden Maschinenparameter und/oder der Einstellvorgaben berücksichtigt.

2. Landwirtschaftliches Gespann nach Anspruch 1, **dadurch gekennzeichnet, dass** die Arbeitsmaschinen-Optimierungseinheit ein kennfeldbasierter Arbeitsmaschinen-Einstellautomat ist, und/oder, dass die Anbaugeräte-Optimierungseinheit ein kennfeldbasierter Anbaugeräte-Einstellautomat ist, vorzugsweise, dass die Anbaugeräte-Zielvorgabe eine strategische Zielvorgabe ist, weiter vorzugsweise, dass die strategische Zielvorgabe eine Zielvorgabe, insbesondere eine Minimierung oder Maximierung, der Auslastung des Anbaugerätes (3) und/oder der Arbeitsqualität des Anbaugerätes (3) und/oder der Arbeitseffizienz des Anbaugerätes (3) und/oder der Arbeitsleistung des Anbaugerätes (3) und/oder des Energieverbrauchs ist.

3. Landwirtschaftliches Gespann nach Anspruch 1 oder 2, **dadurch gekennzeichnet, dass** die Ein-/Ausgabeeinheit (7) der landwirtschaftlichen Arbeitsmaschine (2) ein dediziertes Eingabegerät (9) für die Eingabe der Anbaugeräte-Zielvorgabe und/oder ein dediziertes Ausgabegerät (10) für die Anzeige der Zustandsdaten des Anbaugerätes (3) aufweist.

4. Landwirtschaftliches Gespann nach einem der vorhergehenden Ansprüche, **dadurch gekennzeichnet, dass** die Datenschnittstelle seitens der landwirtschaftlichen Arbeitsmaschine (2) derart ausgestaltet ist, dass unterschiedliche Anbaugeräte (3) über universelle Datenpakete die Zustandsdaten unabhängig vom spezifischen Anbaugerät (3) in allgemeiner Form an das Fahrerassistenzsystem (4) übertragen können, vorzugsweise, dass das Fahrerassistenzsystem (4) Zustandsdaten zumindest teilweise, insbesondere vollständig, unabhängig von dem spezifischen Anbaugerät (3) anzeigt.

5. Landwirtschaftliches Gespann nach einem der vorhergehenden Ansprüche, **dadurch gekennzeichnet, dass** die Datenschnittstelle seitens der landwirtschaftlichen Arbeitsmaschine (2) und seitens des Anbaugerätes (3) derart ausgestaltet ist, dass das Fahrerassistenzsystem (4) die Anbaugeräte-Zielvorgabe unabhängig von dem spezifischen Anbaugerät (3) über universelle Datenpakete an die Anbaugeräte-Steuereinheit (6) übertragen kann, und/oder, dass die universellen Datenpakete derart ausgestaltet sind, dass zusätzlich spezifische Parameter des Anbaugerätes (3) als Zustandsdaten übermittelt und/oder mittels der Anbaugeräte-Zielvorgabe beeinflusst werden können.
